(19) Europäisches Patentamt
European Patent Office
Office européen des brevets

(11) **EP 0 778 815 B1**

(12) **EUROPÄISCHE PATENTSCHRIFT**

(45) Veröffentlichungstag und Bekanntmachung des Hinweises auf die Patenterteilung:
**02.12.1998 Patentblatt 1998/49**

(51) Int Cl.6: **C04B 30/02**, C04B 38/00, B01J 13/00, C01B 33/16

(21) Anmeldenummer: **95929888.6**

(22) Anmeldetag: **17.08.1995**

(86) Internationale Anmeldenummer:
**PCT/EP95/03275**

(87) Internationale Veröffentlichungsnummer:
**WO 96/06809 (07.03.1996 Gazette 1996/11)**

(54) **VERFAHREN ZUR HERSTELLUNG VON FASERVERSTÄRKTEN XEROGELEN, SOWIE IHRE VERWENDUNG**

PROCESS FOR PRODUCING FIBRE-REINFORCED XEROGELS AND THEIR USE

PROCEDE DE PRODUCTION DE XEROGELS RENFORCES PAR DES FIBRES ET LEUR UTILISATION

(84) Benannte Vertragsstaaten:
**AT BE CH DE DK ES FR GB GR IE IT LI LU MC NL PT SE**

(30) Priorität: **29.08.1994 DE 4430669**

(43) Veröffentlichungstag der Anmeldung:
**18.06.1997 Patentblatt 1997/25**

(73) Patentinhaber: **HOECHST AKTIENGESELLSCHAFT 65929 Frankfurt am Main (DE)**

(72) Erfinder:
• **FRANK, Dierk
  D-65719 Hofheim (DE)**
• **KESSLER, Birgit
  D-60529 Frankfurt am Main (DE)**
• **ZIMMERMANN, Andreas
  D-64347 Griesheim (DE)**

(74) Vertreter: **Luderschmidt, Schüler & Partner GbR Patentanwälte,
Postfach 3929
65029 Wiesbaden (DE)**

(56) Entgegenhaltungen:
**WO-A-93/06044        WO-A-94/25149
DE-A- 3 346 180**

• **CHEMICAL ABSTRACTS, vol. 119, no. 4, 26.Juli 1993 Columbus, Ohio, US; abstract no. 33157k, & JP,A,05 043 344 (COLLOID RESEARCH)**

**Beschreibung**

Die Erfindung betrifft ein Verfahren zur Herstellung von modifizierten, faserverstärkten Xerogelen mit Porositäten größer als 60 % und Dichten unter 0,6 g/cm³, im folgenden "faserverstärkte Xerogele" genannt, sowie deren Verwendung.

Xerogele mit Porositäten über 60 % und Dichten unter 0,6 g/cm³ weisen wie überkritisch getrocknete Aerogele, aufgrund ihrer sehr geringen Dichte und hohen Porosität eine sehr geringe Wärmeleitfähigkeit auf. Die hohe Porosität führt aber auch zu geringer mechanischer Stabilität sowohl des Gels aus dem das Xerogel getrocknet wird, wie auch des Xerogels.

Aerogele im weiteren Sinn, d.h. im Sinne von "Gel mit Luft als Dispersionsmittel", werden durch Trocknung eines geeigneten Gels hergestellt. Unter den Begriff "Aerogel" in diesem Sinne, fallen Aerogele im engeren Sinne, Xerogele und Kryogele. Dabei wird ein getrocknetes Gel als Aerogel im engeren Sinn bezeichnet, wenn die Flüssigkeit des Gels bei Temperaturen oberhalb der kritischen Temperatur und ausgehend von Drücken oberhalb des kritischen Druckes weitestgehend entfernt wird. Wird die Flüssigkeit des Gels dagegen unterkritisch, beispielsweise unter Bildung einer Flüssig-Dampf-Grenzphase entfernt, dann bezeichnet man das entstehende Gel als Xerogel.

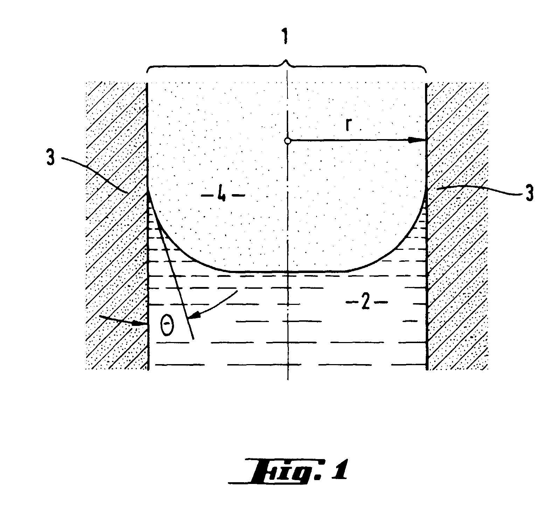

Bei der Trocknung konventioneller Gele treten durch Kapillarkräfte sehr hohe Spannungen auf, die in Verbindung mit der geringen Stabilität des hochporösen Gerüsts zum Kollaps bei der Trocknung führen. Der Kapillardruck $P_c$, der während der Trocknung entsteht, ist bestimmt durch die Oberflächenspannung $\gamma_{LV}$, der Oberfläche zwischen der Porenflüssigkeit 2 und ihrem Dampf 4, den Kontaktwinkel $\Theta$ zwischen Flüssigkeitsmeniskus und Porenwand 3 und den Radius r der Pore 1 (Fig. 1):

$$P_c = -\frac{2\gamma_{LV}\cos\Theta}{r}$$

Der Kollaps läßt sich vermeiden, wenn man das Gel überkritisch trocknet, wie z.B. in der EP-A-0382310, der EP-A-0018955 und der US-A-4,610,863 beschrieben, und damit die Oberflächenspannung $\gamma_{LV}$ auf Null reduziert. Die so hergestellten Aerogele sind jedoch mechanisch nicht sehr stabil.

Die mechanische Stabilität läßt sich jedoch durch eine Faserverstärkung des Aerogels, wie in der WO93/06044 beschrieben, verbessern. Das in der WO93/06044 beschriebene Herstellungsverfahren erfordert aber durch die Notwendigkeit der überkritischen Trocknung einen erheblichen technischen Aufwand. Dabei müssen für die Trocknung eines Gels aus einem Alkohol, z.B. Methanol, Temperaturen von 250 bis 260°C und Drücke zwischen 9,7 und 15,9 MPa angewendet werden.

In der DE-A-43 42 548 und der WO 94/25149 werden Verfahren zur Herstellung von Xerogelen mit Dichten unter 0,3 g/cm³ und Porositäten über 60 % beschrieben, die die überkritische Trocknung von Gelen überflüssig machen. Dabei werden die Gele durch Behandlung der inneren Oberfläche, z.B. durch Silylierung im Fall von SiO₂-Xerogelen, so modifiziert, daß sie an der Luft getrocknet werden können, ohne zu kollabieren. Die so hergestellten Xerogele sind ebenfalls mechanisch nicht sehr stabil und brechen leicht.

Aufgabe ist es daher, ein Verfahren zur Herstellung von mechanisch stabilen Xerogelen mit Porositäten über 60 % und Dichten der Xerogelmatrix unter 0,6 g/cm³ zu finden, das die oben geschilderten Nachteile vermeidet. Es wurde nun gefunden, daß man mechanisch stabile Xerogele herstellen kann, wenn man vor bzw. bei der Bildung des Gels in geeigneter Form und Menge Fasern in das Sol einbringt, die Porenoberfläche des daraus hergestellten Gels in geeigneter Form modifiziert, und es dann unter unterkritischen Bedingungen trocknet. Die erhaltenen Produkte werden im folgenden als "faserverstärkte Xerogele" bezeichnet.

Gegenstand der Erfindung ist ein Verfahren zur Herstellung faserverstärkter Xerogele mit Porositäten größer als 60 Vol.-% und Dichten der Xerogelmatrix kleiner als 0,6 g/cm³, dadurch gekennzeichnet, daß

a) ein Sol hergestellt wird,
b) dem Sol Fasern zugesetzt werden,
c) das in b) erhaltene Sol in ein Gel überführt wird,
d) gegebenenfalls die in dem Gel enthaltene Flüssigkeit ausgetauscht wird,
e) das Gel mit einer oder mehreren oberflächenmodifizierenden Substanzen so umgesetzt wird, daß ein so großer Anteil der Oberflächengruppen des Gels durch Gruppen der oberflächenmodifizierenden Substanz ersetzt wird, daß eine weitere Kondensation zwischen den Oberflächengruppen auf verschiedenen Porenoberflächen weitgehend unterdrückt wird und/oder durch Änderung des Kontaktwinkels zwischen Porenoberfläche und Flüssigkeit aus der getrocknet wird, die Kapillarkräfte reduziert werden,
f) gegebenenfalls die in dem Gel enthaltene Flüssigkeit ausgetauscht wird und
g) das resultierende Gel bei einer Temperatur unter der kritischen Temperatur der in dem Gel enthaltenen Flüssigkeit und einem Druck von 0,001 bar bis zu dem Dampfdruck dieser Flüssigkeit bei dieser Temperatur getrocknet wird.

Als Ausgangsmaterialien dienen für die Sol-Gel-Technik geeignete Si- und Al-Verbindungen (C.J. Brinker, G.W. Scherer, Sol-Gel-Science, 1990, Kap. 2 und 3) wie z.B. Si-, Al-Alkoxide oder Wasserglas sowie solche auf der Basis organischer Stoffe, wie z.B. Melaminformaldehydkondensate (US-A-5,086,085) oder Resorcinformaldehydkondensate (US-A-4,873,219). Sie können auch auf Mischungen der obengenannten Materialien basieren. Weiterhin kann das Sol aus partikulärem oder kolloidalem Si- oder Al-Oxid bestehen. Bevorzugt eingesetzt werden Si-Verbindungen, insbesondere Wasserglas.

Die Solpartikel tragen auf der Oberfläche funktionelle Gruppen, die zur Kondensation fähig sind. Diese Gruppen werden im folgenden Oberflächengruppen genannt. Typischerweise tragen Solpartikel aus Si- oder Al-Verbindungen hydrophile Hydroxylgruppen (OH). Herstellungsbedingt können auch noch Reste von Alkoxygruppen (OR) vorliegen, wenn Alkoxide als Ausgangsmaterial eingesetzt wurden ( C.J. Brinker, G.W. Scherer, Sol-Gel-Science, 1990, Kap. 10).

Bei den dem Sol zugesetzten Fasern kann es sich um einzelne Fasern, Fasermatten oder - vliese handeln. Die Zugabe der Fasern kann insbesondere im Fall von Einzelfasern auch während der Gelbildung erfolgen, wenn das Sol schon eine hohe Viskosität erreicht hat, aber noch nicht fest ist.

Die Überführung des Sols in ein Gel kann zum Beispiel durch Hydrolyse und Kondensation von Si- oder Al-Alkoxiden, Gelieren von partikulärem oder kolloidalem Si- oder Al-Oxid oder einer Kombination dieser Methoden erfolgen. Die Herstellung von Si-haltigen Gelen wird beispielsweise in der WO93/06044 beschrieben.

Es ist vorteilhaft, das in Schritt c) oder d) erhaltene Gel vor der Oberflächenmodifikation altern zu lassen, um die Gelfestigkeit zu erhöhen. Die Alterung des Gels findet im allgemeinen bei einer Temperatur von 20°C bis zum Siedepunkt der in dem Gel enthaltenen Flüssigkeit statt. Handelt es sich bei der Gelflüssigkeit beispielsweise um Wasser, so findet der Alterungsprozeß im allgemeinen bei 20 bis 90°C, vorzugsweise 20 bis 70°C, bei einem pH-Wert von 6 bis 11, vorzugsweise 6 bis 9, innerhalb von 1 Minute bis 48 Stunden, insbesondere 15 Minuten bis 24 Stunden statt.

Falls in Schritt a) ein wäßriges Sol verwendet wurde und der pH-Wert mit einer Mineralsäure verändert wurde, sollte das Gel mit Wasser elektrolytfrei gewaschen werden. Die in dem Gel enthaltene Flüssigkeit kann in einem Waschprozeß (Schritt d) durch die gleiche oder eine andere Flüssigkeit ausgetauscht werden. Enthält das Gel beispielsweise Wasser, empfiehlt es sich, das Gel mit einem protischen oder aprotischen organischen Lösungsmittel zu waschen bis der Wassergehalt des Gels ≤ 5 Gew.-%, bevorzugt ≤ 2 Gew.-% ist.

Als organische Lösungsmittel werden dabei im allgemeinen aliphatische Alkohole, Ether, Ester oder Ketone sowie aliphatische oder aromatische Kohlenwasserstoffe verwendet. Bevorzugte Lösungsmittel sind Methanol, Ethanol, Aceton, Tetrahydrofuran, Essigsäureethylester, Dioxan, n-Hexan, n-Heptan und Toluol. Man kann auch Gemische aus den genannten Lösungsmitteln verwenden. Das Lösungsmittel muß hinsichtlich der in Schritt e) eingesetzten oberflächenmodifizierenden Substanz weitgehend inert sein.

Die Schritte a) bis d) werden im allgemeinen bei einer Temperatur zwischen dem Gefrierpunkt der im Gel enthaltenen Flüssigkeit und 70°C, jedoch maximal der Siedetemperatur der im Gel enthaltenen Flüssigkeit, durchgeführt.

Durch die in Schritt e) verwendeten oberflächenmodifizierenden Substanzen wird ein großer Anteil der hydrophilen oder reaktiven Oberflächengruppen auf den Porenoberflächen zu hydrophoben oder zur weiteren Kondensation ungeeigneten Oberflächengruppen umgesetzt.

Als Folge wird eine weitere Kondensation zwischen Gruppen auf verschiedenen Porenoberflächen unterdrückt, bzw. werden durch Änderung des Kontaktwinkels zwischen Porenwand und Flüssigkeitsmeniskus der Flüssigkeit aus der getrocknet wird, die Kapillarkräfte reduziert.

Als ursprüngliche Oberflächengruppen treten dabei im allgemeinen Gruppen der Formel MOH oder MOR auf, wobei M = Al oder Si und R = $C_1$-$C_6$-Alkyl, vorzugsweise Methyl oder Ethyl, ist. Durch Umsetzung mit oberflächenmodifizierenden Substanzen der allgemeinen Formel $R'_nMX_m$ werden die ursprünglichen Oberflächengruppen durch inerte Gruppen des Typs $MR'_n$ ersetzt. Dabei sind n und m ganze Zahlen größer als Null, deren Summe der Wertigkeit von M entspricht. R' ist Wasserstoff oder ein nicht reaktiver organischer linearer, verzweigter, zyklischer, aromatischer oder heteroaromatischer Rest wie z.B. $C_1$-$C_{18}$-Alkyl, vorzugsweise $C_1$-$C_6$-Alkyl, besonders bevorzugt Methyl oder Ethyl, Cyclohexyl oder Phenyl; die R'sind unabhängig voneinander gleich oder verschieden oder können verbrückt sein. Weiter ist X ein Halogen, vorzugsweise Cl, oder ein Rest -OR", -SR" oder -NR"$_2$, wobei R" einen geradkettigen oder verzweigten, ein- oder mehrfach gleich oder verschieden substituierten aliphatischen Rest $C_1$ bis $C_{18}$ darstellt, in dem eine oder mehrere $CH_2$-Gruppen durch -C≡C-, -CH=CH-, -COO-, -O(C=O)-, -SiR'''$_2$-, -CO-, Phenylendiyl und/oder bis zu jede $CH_2$-Einheit durch O oder NR''' ersetzt sein können, wobei R''' gleich Phenyl, $C_1$-$C_{18}$-Alkyl oder Benzyl ist, oder R" ein Benzylrest oder Phenylrest bedeutet, der durch 1 bis 5 Substituenten R', OH, OR', COOR', OCOR', $SO_3H$, $SO_2Cl$, F, Cl, Br, $NO_2$ oder CN substituiert sein kann; im Falle von N können die R" unabhängig voneinander gleich oder verschieden sein. Ist m mindestens zwei, so können die X unabhängig voneinander gleich oder verbrückt sein. Es können auch Mischungen der oberflächenmodifizierenden Substanzen eingesetzt werden.

Bevorzugt werden Silylierungsmittel der Formel $R'_{4-n}SiCl_n$ oder $R'_{4-n}Si(OR')_n$ mit n = 1 bis 3 eingesetzt, wobei R' die vorstehende Bedeutung hat. Auch Silazane sind geeignet. Vorzugsweise verwendet man Methyltrichlorsilan, Dimethyldichlorsilan, Trimethylchlorsilan, Trimethylmethoxysilan oder Hexamethyldisilazan.

Die Umsetzung wird im allgemeinen bei 20 bis 100°C, vorzugsweise 30 bis 70°C, jedoch maximal bei der Siedetemperatur der im Gel enthaltenen Flüssigkeit, durchgeführt.

Vorzugsweise kann das silylierte Gel in Schritt f) mit einem protischen oder aprotischen Lösungsmittel gewaschen werden, bis die unumgesetzte oberflächenmodifizierende Substanz im wesentlichen entfernt ist (Restgehalt $\leq$ 1 Gew.-%). Geeignete Lösungsmittel sind dabei die bei Schritt d) genannten. Analog sind die dort als bevorzugt genannten Lösungsmittel auch hier bevorzugt.

In Schritt g) wird das faserverstärkte, oberflächenmodifizierte Gel bei Temperaturen von -30 bis 200°C, vorzugsweise 0 bis 100°C, sowie einem Druck von 0,001 bis 20 bar, vorzugsweise 0,01 bis 5 bar, besonders bevorzugt 0,1 bis 2 bar, getrocknet. Höhere Temperaturen als 200°C und/oder höhere Drücke als 20 bar sind ohne weiteres möglich, aber sie sind mit überflüssigem Aufwand verbunden und bringen keine Vorteile mit sich.

Der Vorteil des erfindungsgemäßen Verfahrens liegt darin, daß bei der Trocknung Temperaturen und Drücke genügen, die für die üblichen Lösungsmittel weit unter deren kritischen Temperaturen und/oder Drücken liegen. Die Trocknung wird im allgemeinen so lange fortgeführt, bis das Gel einen Lösungsmittel-Restgehalt von weniger als 0,1 Gew.-% aufweist.

Als Trocknungsverfahren geeignet sind zum Beispiel die Kontakt- und Konvektionstrocknung.

Die Trocknung des Gels kann durch Verwendung von dielektrischen Trocknungsverfahren, z.B. durch Mikrowellentrocknung, wesentlich beschleunigt werden. Dazu wird nach der Oberflächenmodifikation das Lösungsmittel in Schritt f), falls erforderlich, gegen ein Lösungsmittel ausgetauscht, das Mikrowellen gut absorbiert wie z.B. Wasser, Ethanol oder vorzugsweise Aceton. Die Gele lassen sich dann in einem Mikrowellentrockner schnell trocknen.

Bevorzugt ist das erfindungsgemäße Verfahren zur Herstellung von faserverstärkten $SiO_2$-Xerogelen mit Porositäten größer als 60 Vol.-% und Dichten der Xerogelmatrix kleiner als 0,6 g/cm$^3$, dadurch gekennzeichnet, daß

a) eine wäßrige Wasserglaslösung ($SiO_2$-Konzentration $\leq$ 10 Gew. %, vorzugsweise $\leq$ 7 Gew. %, auf einen pH-Wert $\leq$ 3 eingestellt wird, beispielsweise mit Hilfe eines sauren Ionenaustauscherharzes oder einer Mineralsäure, und zu der dabei entstandenen Kieselsäure eine Base, im allgemeinen $NH_4OH$, NaOH, KOH, $Al(OH)_3$ und/oder kolloidale Kieselsäure, gegeben wird,

b) Fasern zugegeben werden,

c) man die Kieselsäure polykondensieren läßt,

d) das in Schritt c) erhaltene faserverstärkte Gel mit einem organischen Lösungsmittel gewaschen wird bis der Wassergehalt des Gels $\leq$ 5 Gew.-% ist,

e) das in Schritt d) erhaltene Gel mit einem Silylierungsmittel umgesetzt wird,

f) gegebenenfalls das silylierte Gel mit einem organischen Lösungsmittel gewaschen wird bis der Restgehalt des unumgesetzten Silylierungsmittels $\leq$ 1 Gew.-% ist und

g) das in Schritt e) oder f) erhaltene silylierte Gel bei -30 bis 200°C und 0,001 bis 20 bar getrocknet wird.

In Schritt a) wird bevorzugt ein saures Ionenaustauscherharz eingesetzt.

Als Fasermaterial können anorganische Fasern, wie Glasfasern oder Mineralfasern, organische Fasern, wie Polyesterfasern, Aramidfasern, Nylonfasern oder Fasern pflanzlichen Ursprungs, sowie Gemische derselben verwendet werden. Die Fasern können auch beschichtet sein, z.B. Polyesterfasern, die mit einem Metall wie Aluminium metallisiert sind.

Zur besseren Dispergierbarkeit der Fasern bzw. Benetzung des Vlieses können die Fasern mit einer geeigneten Schlichte beschichtet sein. Die Beschichtung kann auch einer besseren Anbindung des Gels an die Fasern dienen.

Die Brandklasse des faserverstärkten Xerogels wird durch die Brandklasse der Xerogelmatrix und die des Fasermaterials bestimmt. Um eine möglichst günstige Brandklasse (schwer entflammbar oder unbrennbar) des faserverstärkten Xerogels zu erhalten, sollten die Fasern aus nichtbrennbarem Material, wie z. B. Mineral- oder Glasfasern, oder aus schwerentflammbarem Material, wie z. B. Melaminharzen, bestehen. Weiterhin ist es möglich, die organischen Bestandteile der Xerogelmatrix durch thermische Behandlung abzuspalten, ohne daß die Struktur und damit die thermische Leitfähigkeit des Xerogels wesentlich verändert wird.

Um eine möglichst geringe Wärmeleitfähigkeit des faserverstärkten Xerogels zu erhalten, sollte

a) der Volumenanteil der Fasern 0,1 bis 30 %, vorzugsweise 0,1 bis 10 % betragen und

b) die Wärmeleitfähigkeit des Fasermaterials so gering wie möglich, vorzugsweise < 1 W/mK,

sein.

Durch geeignete Wahl von Faserdurchmesser und/oder -material kann der Strahlungsbeitrag zur Wärmeleitfähigkeit reduziert und eine große mechanische Festigkeit erzielt werden. Dazu soll der Faserdurchmesser bei

a) nichtmetallisierten Fasern vorzugsweise 0,1 bis 30 µm und/oder bei

b) metallisierten Fasern vorzugsweise 0,1 bis 20 µm betragen.

Der Strahlungsbeitrag kann weiter dadurch reduziert werden, daß IR-getrübte Fasern, z.B. mit Ruß geschwärzte PET-Fasern, verwendet werden.

Der Strahlungsbeitrag zur Wärmeleitfähigkeit kann weiter reduziert werden, wenn man dem Sol vor der Gelherstellung ein IR-Trübungsmittel, z.B. Ruß, Titandioxid, Eisenoxide oder Zirkondioxid, zusetzt.

Die mechanische Festigkeit wird weiter durch Länge und Verteilung der Fasern im Xerogel beeinflußt.

Die Fasern können z.B. als einzelne Fasern ungeordnet oder ausgerichtet eingebracht werden.

Ebenso können Vliese oder Matten verwendet werden, wobei auch mehrere Vliese oder Matten übereinandergeschichtet werden können. Im Falle der Schichtung von Matten mit einer Vorzugsrichtung ist eine Änderung der Vorzugsrichtung von einer Schicht zur nächsten vorteilhaft. Die Verwendung von Vliesen oder Matten bringt den Vorteil, daß bei starker Biegebeanspruchung zwar in der Xerogelmatrix Risse entstehen können, die Xerogelmatrix durch das Vlies jedoch nicht bricht. Besonders vorteilhaft für Lösungsmittelaustausch und Trocknung sind faserverstärkte Gelplatten mit einer Dicke zwischen 0,5 und 5 mm, da die Dauer für den Austausch von Lösungsmitteln bzw. die Trocknungszeit wesentlich durch die Diffusion des Lösungsmittels bzw. des Lösungsmitteldampfes bestimmt wird.

Die so erhaltenen faserverstärkten Xerogele sind hydrophob, wenn die durch die Oberflächenmodifikation aufgebrachten Oberflächengruppen hydrophob sind, wie z.B. bei der Verwendung von Trimethylchlorsilan. Die Hydrophobizität kann nachträglich beispielsweise durch Ausheizen bzw. partielle Pyrolyse reduziert werden.

Dickere Platten aus faserverstärkten Xerogelen können durch Zusammenfügen von dünnen Platten z. B. durch Einbringen in eine geeignete Hülle, durch Verkleben oder durch eine geeignete mechanische Verbindung wie Klammern oder Nähen, erhalten werden.

Die Oberfläche des faserverstärkten Xerogels kann mit dem Fachmann bekannten Materialien wie z.B. Kunststofffolien, Papier, Pappe, Vliesen oder Geweben, kaschiert werden.

Die nach dem erfindungsgemäßen Verfahren erhaltenen faserverstärkten Xerogele eignen sich aufgrund ihrer geringen Wärmeleitfähigkeit als Wärmeisolationsmaterialien. Bei Auswahl geeigneter lichtdurchlässiger Fasern, z.B. Glasfasern, erhält man ein lichtdurchlässiges, transparentes Xerogel, das sich für die transparente Wärmedämmung eignet. Durch die Wahl des eingesetzten Fasermaterials kann die Biegesteifigkeit der Platten dabei variiert werden. Durch Wahl geeigneten Fasermaterials und geeigneter Faserverteilung können dabei neben der isolierenden Wirkung dekorative Effekte erzielt werden.

Daneben können sie als Schallabsorptionsmaterialien direkt oder in der Form von Resonanzabsorbern verwendet werden, da sie eine geringe Schallgeschwindigkeit und eine für massive Materialien hohe Schalldämpfung aufweisen.

Kurze Beschreibung der Abbildung

Figur 1 zeigt eine schematische Darstellung einer Pore 1, die mit Porenflüssigkeit 2 und Dampf 4 je in etwa halb gefüllt ist, den zwischen Flüssigkeitsmeniskus und Porenwand 3 auftretenden Kontaktwinkel $\Theta$ und den Radius r der Pore.

Beispiel 1:

Aus Tetraethylorthosilikat (TEOS) wurden verschiedene faserverstärkte Xerogele nach folgendem Verfahren hergestellt:

100 ml TEOS, 100 ml Ethanol, 7,98 ml destilliertes Wasser und 0,33 ml 1M HCl wurden zusammengegeben und für 1,5 bis 2 Stunden unter Rückfluß gekocht.

10 Teile des Sols wurden mit einem Teil einer 0,5 molaren $NH_4OH$-Lösung versetzt und in Petrischalen über die darin liegenden Steinwollefasern gegossen. Die Steinwolle wurde aus einer handelsüblichen Isoliermatte ausgeschnitten. Die Menge war so groß, daß die Fasern gerade bedeckt waren. Die Gelierzeit betrug ca. 20 Minuten. Die Proben wurden dabei dicht verschlossen. Das Altern des Gels wurde durch 24-stündiges Tempern bei 50°C herbeigeführt.

Das gealterte, auf Raumtemperatur abgekühlte Gel wurde in Ethanol gegeben und anschließend 1 Stunde auf 50°C erwärmt. Dieser Vorgang wurde noch zweimal mit frischem Ethanol und anschließend einmal mit n-Hexan wiederholt. Danach wurde noch dreimal das n-Hexan ausgetauscht, und die Probe für weitere 24 Stunden bei 50°C gelagert.

Das feuchte Gel wurde dann mit 10 Gew.-% Trimethylchlorsilan (TMCS) versetzt und 24 Stunden bei 50°C gelagert. Danach wurden die TMCS-Reste zweimal mit n-Hexan je 1 Stunde bei 50°C ausgewaschen.

Die Trocknung erfolgte dann in drei Stufen über jeweils 24 Stunden bei 37°C, 50°C und 140°C.

Tabelle 1 zeigt die Resultate der Versuche. Die Wärmeleitfähigkeit wurde mit einer Heizdrahtmethode ( O. Nielsson, G. Rüschenpöhler, J. Groß, J. Fricke, High Temperatures-High Pressures, 21 (1989), 267-274), der Modul und die Bruchspannung mit einer Drei-Punkt-Biegemethode (z.B. G.W. Scherer, S.A. Pardenek, R.M. Swiatek, J. Non-Crystalline Solids, 107 (1988), 14-22) gemessen.

Das faserverstärkte Xerogel brach bei der Drei-Punkt-Biegemessung nicht bei einer bestimmten Spannung, sondern verformte sich bei hohen Lasten nur irreversibel.

Beispiel 2:

Die Versuche wurden wie in Beispiel 1 durchgeführt, wobei das Fasermaterial Hoechst Aramid-(HMA)-Kurzschnitt mit 2 mm Länge war. Die Ergebnisse sind in Tabelle 1 zusammengefaßt.

Das faserverstärkte Xerogel brach bei der Drei-Punkt-Biegemessung nicht bei einer bestimmten Spannung, sondern verformte sich bei hohen Lasten nur irreversibel.

Beispiel 3:

Die Versuche wurden wie in Beispiel 1 durchgeführt, wobei als Fasermaterial ein Polyestervlies (PET) aus je 50 % Trevira® 290 mit 0,9 dtex und 1,7 dtex mit einer Dichte von 15 kg/m$^3$, vernadelt mit 150 Stichen/cm$^2$, verwendet wurde. Die Ergebnisse sind in Tabelle 1 zusammengefaßt.

Das faserverstärkte Xerogel brach bei der Drei-Punkt-Biegemessung nicht bei einer bestimmten Spannung, sondern verformte sich bei hohen Lasten nur irreversibel.

Beispiel 4:

Die Versuche wurden wie in Beispiel 1 durchgeführt, wobei als Fasermaterial ein Polyestervlies TREVIRA SPUNBOND® mit einem Flächengewicht von 70 kg/m$^3$ verwendet wurde. Die Ergebnisse sind in Tabelle 1 zusammengefaßt.

Das faserverstärkte Xerogel brach bei der Drei-Punkt-Biegemessung nicht bei einer bestimmten Spannung, sondern verformte sich bei hohen Lasten nur irreversibel.

Beispiel 5:

Die Versuche wurden wie in Beispiel 1 nun aber mit Glasfasern durchgeführt, Die Ergebnisse sind in Tabelle 1 zusammengefaßt.

Das faserverstärkte Xerogel brach bei der Drei-Punkt-Biegemessung nicht bei einer bestimmten Spannung, sondern verformte sich bei hohen Lasten nur irreversibel.

Beispiel 6:

1 l einer Natriumwasserglaslösung (mit einem Gehalt von 8 Gew.-% SiO$_2$ und einem Na$_2$O:SiO$_2$ Gewichtsverhältnis von 1:3,3) wurde zusammen mit 0,5 l eines sauren Ionenaustauscherharzes (Styroldivinylbenzolcopolymer mit Sulfonsäuregruppen, handelsüblich unter dem Namen Duolite® C20) gerührt, bis der pH-Wert der wäßrigen Lösung 2,7 betrug. Anschließend wurde das Ionenaustauscherharz abfiltriert und die wäßrige Lösung mit 0,5 molarer NH$_4$OH-Lösung auf einen pH-Wert von 4,8 eingestellt.

In die gelierfähige Lösung wurde dann ein Polyestervlies aus je 50 % TREVIRA® 290 mit 0,9 dtex und 1,7 dtex mit einer Dichte von 15 kg/m$^3$, vernadelt mit 150 Stichen/cm$^2$, eingebracht. Der Anteil des Vlieses beträgt 5 Vol.-% in Bezug auf das Gel.

Danach ließ man das entstandene Gel noch 24 Stunden bei 50°C altern. Das in dem Gel enthaltene Wasser wurde zunächst mit 3 l Ethanol extrahiert. Danach wurde das Ethanol mit 3 l n-Heptan ausgetauscht. Das hexanhaltige Gel wurde mit Trimethylchlorsilan (TMCS) silyliert (0,05 g TMCS pro Gramm nasses Gel), dann wieder mit 0,5 l n-Hexan gewaschen. Die Trocknung des Gels erfolgte an Luft (3 Stunden bei 40°C, dann 2 Stunden bei 50°C und 12 Stunden bei 150°C).

Das faserverstärkte Xerogel brach bei der Drei-Punkt-Biegemessung nicht bei einer bestimmten Spannung, sondern verformte sich bei hohen Lasten nur irreversibel. Der Elastizitätsmodul betrug 2 MPa.

Beispiel 7:

Der Versuch wurde wie in Beispiel 6 nun aber mit Glasfasern durchgeführt. Das faserverstärkte Xerogel brach bei der Drei-Punkt-Biegemessung nicht bei einer bestimmten Spannung, sondern verformte sich bei hohen Lasten nur irreversibel. Der Elastizitätsmodul betrug 10 MPa.

Beispiel 8 bis 11:

Es wurden Gele wie in Beispiel 1 bis 4 hergestellt. Vor der Trocknung wurde ein Lösungsmitteltausch mit Ethanol durchgeführt. Die Proben wurden daraufhin mit Mikrowellen bei einer Leistung von 50 W in einem Ofen der Firma EI-A, München getrocknet. Es trat kein Volumenschrumpf auf. Tabelle 2 zeigt die für die Trocknung notwendigen Trocknungszeiten.

Tabelle 1: Experimentelle Resultate für Wärmeleitfähigkeit und Modul faserverstärkter TEOS-Xerogele

| Bsp. | Fasermaterial | Volumenanteil d. Fasern [%] | Dichte [kg/m³] | Wärmeleitfähig- keit [mW/mK] | Elastizitäts- modul [MPa] | Bruchspannung [MPa] |
|---|---|---|---|---|---|---|
| 1 | Steinwolle | 5 | 157 | 23 | 4 | x |
| 2 | HMA-Kurzschnitt, 2 mm | 5 | 184 | 21 | 2 | x |
| 3 | PET Vlies, 150 Stiche/cm², 15 kg/m³ | 1,4 | 200 | 20 | 2 | x |
| 4 | PET-Trevira Spunbond, 70 kg/m³ | 5 | 250 | 33 | 20 | x |
| 5 | Glasfasern | 2 | 180 | 18 | 8 | x |

x = Es trat nur irreversible Verformung unter Rißbildung auf, aber kein Brechen

Tabelle 2: Experimentelle Resultate für die Trocknung von TEOS-Xerogelen mit Mikrowellen aus Ethanol bei 50 W Leistung

| Bsp. | Fasermaterial | Dicke der Probe [mm] | Trocknungs- zeit [min] | Dichte [kg/m³] | Restfeuchte [%] | Volumenschrumpf [%] |
|------|---------------|----------------------|------------------------|----------------|-----------------|---------------------|
| 8 | Steinwolle | 6 | 110 | 160 | 0,82 | 0 |
| 9 | HMA-Kurzschnitt, 2 mm | 7 | 55 | 181 | 0,00 | 0 |
| 10 | PET Vlies, 100 Stiche/cm², 19 kg/m³ | 3 | 40 | 203 | 1,06 | 0 |
| 11 | PET-Trevira Spunbond, 70 kg/m³ | 3 | 30 | 177 | 0,00 | 0 |

EP 0 778 815 B1

Beispiel 12:

Es wurde ein Gel wie in Beispiel 3 hergestellt. Vor der Trocknung wurde noch ein Lösungsmitteltausch mit Ethanol durchgeführt. Die Trocknung erfolgte mit einem auf 80 °C erhitzten Stickstoffstrom für eine Trocknungszeit von 60 Minuten. Folgende Kenndaten ergaben sich für das getrocknete faserverstärkte Xerogel:

| Dicke der Probe | 3 mm |
| Dichte | 170 kg/m$^3$ |
| Restfeuchte | 1,6 % |
| Volumenschrumpf | 2 % |

Beispiel 13

Auf der Basis von Wasserglas wurden Xerogelplatten nach folgendem Verfahren hergestellt: Ein Glasfaservlies mit einem Flächengewicht von 300 g/m$^2$ und einer Dicke von 3 mm (PolyMat-Glasnadelmatte Typ G300 der Fa. Schuller, Wertheim) wurde bei 500°C für 1 Stunde ausgeglüht.
1 1 einer Natriumwasserglaslösung (mit einem Gehalt von 8 Gew.-% SiO$_2$ und ein Na$_2$O:SiO$_2$ Gewichtsverhältnis von 1:3,3) wurde zusammen mit 0,5 1 eines sauren Ionenaustauscherharzes (Styroldivinylbenzolcopolymer mit Sulfonsäuregruppen handelsüblich unter dem Namen ®Duolite C20) gerührt, bis die wäßrige Lösung eine pH-Wert von 2,7 erreicht hatte. Anschließend wurde das Ionenaustauscherharz abfiltriert und die wäßrige Lösung mit 1 molarer NaOH-Lösung auf einen pH-Wert von 4,8 gebracht.
Das Vlies wurde in eine Form gegeben und mit dem Sol übergossen, so daß das Vlies ganz mit Sol bedeckt war. Die Form wurde dann dicht verschlossen und in einem Trockenschrank für 5 Stunden bei 85°C gelagert.
Die Platte wurde dann mit Aceton gewaschen bis der Wassergehalt unter 0,5 Gew.-% lag. Das feuchte Gel wurde mit 10 Gew.-% Trimethylchlorsilan (TMCS) versetzt und 24 Stunden bei Raumtemperatur gelagert. Danach wurde es noch sechsmal mit Aceton gewaschen.
Die Trocknung erfolgte in zwei Stufen, 24 Stunden bei 50°C und 850 mbar Druck, dann 12 Stunden bei 140°C und 50 mbar Druck.
Die Dichte des Verbundmaterials betrug 0,25 g/cm$^3$. Die Wärmeleitfähigkeit wurde wie in Beispiel 1 bestimmt. Für die Wärmeleitfähigkeit ergab sich ein Wert von 17 mW/mK. Die Xerogelplatte zerbrach bei der Dreipunkt-Biegemessung nicht bei einer bestimmten Spannung, sondern verformte sich bei hohen Lasten nur irreversibel.

**Patentansprüche**

1. Verfahren zur Herstellung faserverstärkter Xerogele mit Porositäten größer als 60 Vol.-% und Dichten der Xerogelmatrix kleiner als 0,6 g/cm$^3$, dadurch gekennzeichnet, daß

   a) ein Sol hergestellt wird,
   b) dem Sol Fasern zugesetzt werden,
   c) das in b) erhaltene Sol in ein Gel überführt wird,
   d) gegebenenfalls die in dem Gel enthaltene Flüssigkeit ausgetauscht wird,
   e) das Gel mit einer oder mehreren oberflächenmodifizierenden Substanzen so umgesetzt wird, daß ein so großer Anteil der Oberflächengruppen des Gels durch Gruppen der oberflächenmodifizierenden Substanz ersetzt wird, daß eine weitere Kondensation zwischen den Oberflächengruppen auf verschiedenen Porenoberflächen weitgehend unterdrückt wird und/oder durch Änderung des Kontaktwinkels zwischen Porenoberfläche und Flüssigkeit aus der getrocknet wird, die Kapillarkräfte reduziert werden,
   f) gegebenenfalls die in dem Gel enthaltene Flüssigkeit ausgetauscht wird und
   g) das resultierende Gel bei einer Temperatur unter der kritischen Temperatur der in dem Gel enthaltenen Flüssigkeit und einem Druck von 0,001 bar bis zu dem Dampfdruck dieser Flüssigkeit bei dieser Temperatur getrocknet wird.

2. Verfahren gemäß Anspruch 1, dadurch gekennzeichnet, daß man das in Schritt c) oder d) erhaltene Gel bei einer Temperatur von 20°C bis zum Siedepunkt der in dem Gel enthaltenen Flüssigkeit altern läßt.

3. Verfahren gemäß Anspruch 1 oder 2, dadurch gekennzeichnet, daß das Gel in Schritt e) mit mindestens einer oberflächenmodifizierenden Substanz der allgemeinen Formel R'$_n$MX$_m$ umgesetzt wird, worin R' Wasserstoff oder ein nicht reaktiver organischer linearer, verzweigter, zyklischer, aromatischer oder heteroaromatischer Rest ist, wobei die R' unabhängig voneinander gleich oder verschieden sind, M = Al oder Si ist, X ein Halogen oder ein Rest -OR", -SR" sowie -NR"$_2$ ist, wobei R" einen geradkettigen oder verzweigten, ein- oder mehrfach gleich oder verschieden substituierten aliphatischen Rest $C_1$ bis $C_{18}$ darstellt, in dem eine oder mehrere $CH_2$-Gruppen durch -C≡C-, -CH=CH-, -COO-, -O(C=O)-, -SiR'''$_2$-, -CO-, Phenylendiyl und/oder bis zu jede $CH_2$-Einheit durch O oder NR''', ersetzt sein können, wobei R''' gleich Phenyl, $C_1$-$C_{18}$-Alkyl oder Benzyl ist, oder R" einen Benzylrest oder Phenylrest bedeutet, der durch 1 bis 5 Substituenten R', OH, OR', COOR', OCOR', $SO_3H$, $SO_2Cl$, F, Cl, Br, $NO_2$ oder CN substituiert sein kann; und im Falle von N die R" unabhängig voneinander gleich oder verschieden sein können,

n und m ganze Zahlen größer Null sind, deren Summe oder Wertigkeit von M entspricht, wobei für m ≥ 2 die X unabhängig voneinander gleich oder verschieden sein können.

4. Verfahren zur Herstellung von faserverstärkten $SiO_2$-Xerogelen gemäß Anspruch 3, dadurch gekennzeichnet, daß

a) eine wäßrige Wasserglaslösung auf einen pH-Wert ≤ 3 eingestellt wird und zu der dabei entstandenen Kieselsäure eine Base gegeben wird,
b) Fasern zugegeben werden,
c) man die Kieselsäure polykondensieren läßt,
d) das in Schritt c) erhaltene faserverstärkte Gel mit einem organischen Lösungsmittel gewaschen wird bis der Wassergehalt des Gels ≤ 5 Gew.-% ist,
e) das in Schritt d) erhaltene Gel mit einem Silylierungsmittel umgesetzt wird,
f) gegebenenfalls das silylierte Gel mit einem organischen Lösungsmittel gewaschen wird bis der Restgehalt des unumgesetzten Silylierungsmittels ≤ 1 Gew.-% ist und
g) das in Schritt e) oder f) erhaltene silylierte Gel bei -30 bis 200°C und 0,001 bis 20 bar getrocknet wird.

5. Verfahren gemäß mindestens einem der Ansprüche 1 bis 4, dadurch gekennzeichnet, daß das Gel in Schritt g) durch ein dielektrisches Verfahren getrocknet wird.

6. Verfahren gemäß Anspruch 5, dadurch gekennzeichnet, daß das Gel durch Mikrowellen getrocknet wird.

7. Verfahren gemäß mindestens einem der Ansprüche 1 bis 6, dadurch gekennzeichnet, daß der Volumenanteil der Fasern 0,1 bis 30 % beträgt.

8. Verfahren gemäß mindestens einem der Ansprüche 1 bis 7, dadurch gekennzeichnet, daß der Faserdurchmesser

a) bei nichtmetallisierten Fasern 0,1 bis 30 $\mu$m und/oder
b) bei metallisierten Fasern 0,1 bis 20 $\mu$m beträgt.

9. Verfahren gemäß mindestens einem der Ansprüche 1 bis 8, dadurch gekennzeichnet, daß man dem Sol in Schritt a) oder b) ein IR-Trübungsmittel zusetzt.

10. Verfahren gemäß mindestens einem der Ansprüche 1 bis 9, dadurch gekennzeichnet, daß Fasern in Form von Vliesen oder Matten verwendet werden.

11. Verfahren gemäß mindestens einem der Ansprüche 1 bis 10, dadurch gekennzeichnet, daß einzelne Fasern ungeordnet oder ausgerichtet verwendet werden.

12. Verwendung der gemäß dem Verfahren nach mindestens einem der Ansprüche 1 bis 11 hergestellten, faserverstärkten Xerogele als Wärmeisolationsmaterial und/oder Schallabsorptionsmaterial.

**Claims**

1. A process for producing fiber-reinforced xerogels having porosities greater than 60 % by volume and xerogel matrix densities less than 0.6 g/cm$^3$, which comprises

a) preparing a sol,
b) adding fibers to the sol,

c) converting the sol obtained in b) into a gel,

d) optionally exchanging the liquid present in the gel,

e) reacting the gel with one or more surface-modifying substances in such a way that a sufficiently large proportion of the surface groups of the gel is replaced by groups of the surface-modifying substance as to substantially suppress any further condensation between the surface groups on different pore surfaces and/or reduce the capillary forces by changing the contact angle between pore surface and the liquid from which the drying takes place,

f) optionally exchanging the liquid present in the gel, and

g) drying the resulting gel at a temperature below the critical temperature of the liquid present in the gel and a pressure of 0.001 bar to the vapor pressure of this liquid at this temperature.

2. The process of claim 1, wherein the gel obtained in step c) or d) is aged at a temperature of 20°C to the boiling point of the liquid present in the gel.

3. The process of claim 1 or 2, wherein the gel is reacted in step e) with at least one surface-modifying substance of the general formula $R'_n MX_m$, where R' is hydrogen or a nonreactive, organic, linear, branched, cyclic, aromatic or heteroaromatic radical, each R' being independently identical to or different from the others, M is Al or Si, X is a halogen or a radical -OR", -SR" or -NR"$_2$, where R" is a straight-chain or branched, identically or differently mono- or polysubstituted aliphatic radical $C_1$ to $C_{18}$ in which one or more $CH_2$ groups can be replaced by -C≡C-, -CH=CH-, -COO-, -O(C=O)-, -SiR"'$_2$-, -CO-, phenylenediyl and/or up to every $CH_2$ unit can be replaced by O or NR"', where R"' is phenyl, $C_1$-$C_{18}$-alkyl or benzyl, or R" is a benzyl radical or phenyl radical which can be substituted by 1 to 5 substituents R', OH, OR', COOR', OCOR', $SO_3H$, $SO_2Cl$, F, Cl, Br, $NO_2$ or CN; and in the case of N each R" is independently identical to or different from the others,

n and m are integers greater than zero whose sum corresponds to the valence of M, each X being independently identical to or different from the others for $m \geq 2$.

4. The process of claim 3 for producing fiber-reinforced $SiO_2$ xerogels, which comprises

a) adjusting an aqueous waterglass solution to a pH $\leq$ 3 and adding a base to the resulting silicic acid,

b) adding fibers,

c) allowing the silicic acid to polycondense,

d) washing the fiber-reinforced gel obtained in step c) with an organic solvent until the water content of the gel is $\leq$ 5 % by weight,

e) reacting the gel obtained in step d) with a silylating agent,

f) optionally washing the silylated gel with an organic solvent until the residual level of unconverted silylating agent is $\leq$ 1 % by weight, and

g) drying the silylated gel obtained in step e) or f) at -30 to 200°C and 0.001 to 20 bar.

5. The process of at least one of claims 1 to 4, wherein the drying of the gel in step g) is effected by means of a dielectric process.

6. The process of claim 5, wherein the gel is dried by microwaves.

7. The process of at least one of claims 1 to 6, wherein the volume proportion of fiber is 0.1 to 30 %.

8. The process of at least one of claims 1 to 7, wherein the fiber diameter is

a) 0.1 to 30 $\mu$m in the case of unmetallized fiber and/or

b) 0.1 to 20 $\mu$m in the case of metallized fiber.

9. The process of at least one of claims 1 to 8, wherein an IR opacifier is added to the sol in step a) or b).

10. The process of at least one of claims 1 to 9, wherein fibers are used in the form of webs or mats.

11. The process of at least one of claims 1 to 10, wherein individual fibers are used, in random or oriented form.

12. The use of the fiber-reinforced xerogels produced by the process of at least one of claims 1 to 11 as thermal insulating material and/or sound absorption material.

**Revendications**

1. Procédé de préparation de xérogels renforcés par des fibres, présentant des porosités supérieures à 60 % en volume et des densités de matrice de xérogel inférieures à 0,6 g/cm$^3$, caractérisé en ce que

   a) on prépare un sol,
   b) on ajoute des fibres au sol,
   c) on convertit le sol obtenu sous b) en un gel,
   d) on échange éventuellement le liquide contenu dans le gel,
   e) on fait réagir le gel avec une ou plusieurs substances de modification de surface de façon qu'une fraction suffisamment grande des groupes de surface du gel soit remplacée par des groupes de la substance de modification de surface pour qu'une condensation ultérieure soit largement supprimée entre les groupes de surface sur des surfaces de pores différents et/ou que les forces capillaires soient réduites par modification de l'angle de contact entre la surface des pores et le liquide à partir de laquelle il est séché,
   f) on échange éventuellement le liquide contenu dans le gel, et
   g) on sèche le gel résultant à une température inférieure à la température critique du liquide contenu dans le gel et à une pression de 0,001 bar jusqu'à la tension de vapeur de ce liquide à cette température.

2. Procédé suivant la revendication 1, caractérisé en ce qu'on laisse vieillir le gel obtenu dans l'étape c) ou d) à une température de 20°C jusqu'au point d'ébullition du liquide contenu dans le gel.

3. Procédé suivant l'une des revendications 1 et 2, caractérisé en ce que le gel est mis à réagir dans l'étape e) avec au moins une substance de modification de surface de la formule générale $R'_nMX_m$, dans laquelle R' représente de l'hydrogène ou un radical aromatique ou hétéroaromatique linéaire, ramifié, cyclique, organique, non réactif, les R' étant indépendamment l'un de l'autre semblables ou différents, M = Al ou Si, X représente un halogène ou un radical -OR", -SR" ainsi que -NR"$_2$, R" représentant un radical aliphatique en $C_1$-$C_{18}$ linéaire ou ramifié, substitué à une ou à plusieurs reprises de manière identique ou différente, dans lequel un ou plusieurs groupes CH$_2$ peuvent être remplacés par -C≡C-, -CH=CH-, -COO-, -O(C=O)-, -SiR'"$_2$-, -CO-, du phénylènediyle et/ou jusqu'à chaque unité CH2 par O ou NR'", R'" représentant du phényle, un alkyle en $C_1$-$C_{18}$ ou du benzyle, ou R" représente un radical benzyle ou phényle, qui peut être substitué par 1 jusqu'à 5 substituants R', OH, OR', COOR', OCOR', SO$_3$H, SO$_2$Cl, F, Cl, Br, NO$_2$ ou CN, et dans le cas de N les R" peuvent, indépendamment l'un de l'autre, être identiques ou différents, n et m représente des nombres entiers supérieurs à 0, dont la somme correspond à la valence de M, les X pouvant, indépendamment l'un de l'autre, être identiques ou différents pour m ≥ 2.

4. Procédé de préparation de SiO$_2$-xérogels renforcés par des fibres suivant la revendication 3, caractérisé en ce que

   a) on ajuste une solution aqueuse de verre soluble à une valeur de pH ≤3 et on verse une base dans l'acide silicique ainsi formé,
   b) on ajoute des fibres,
   c) on laisse l'acide silicique polycondenser,
   d) on lave le gel renforcé par des fibres, obtenu dans l'étape c), avec un solvant organique jusqu'à ce que la teneur en eau du gel soit < 5 % en poids,
   e) on fait réagir le gel obtenu dans l'étape d) avec un agent de silylation,
   f) on lave éventuellement le gel silylé avec un solvant organique jusqu'à ce que la teneur résiduaire de l'agent de silylation qui n'a pas réagi soit ≤ 1 % en poids, et
   g) on sèche le gel silylé, obtenu dans l'étape e) ou f), à -30 jusqu'à 200°C et à 0,001 bar jusqu'à 20 bars.

5. Procédé suivant au moins l'une des revendications 1 à 4, caractérisé en ce que le gel dans l'étape g) est séché par un procédé diélectrique.

6. Procédé suivant la revendication 5, caractérisé en ce que le gel est séché par des micro-ondes.

7. Procédé suivant au moins l'une des revendications 1 à 6, caractérisé en ce que la fraction volumique des fibres est de 0,1 à 30 %.

8. Procédé suivant au moins l'une des revendications 1 à 7, caractérisé en ce que le diamètre des fibres est

   a) pour des fibres non métallisées de 0,1 à 30 μm et/ou

b) pour des fibres métallisées de 0,1 à 20 μm.

9. Procédé suivant au moins l'une des revendications 1 à 8, caractérisé en ce qu'on ajoute au sol dans l'étape a) ou b) un agent opacifiant aux IR.

10. Procédé suivant au moins l'une des revendications 1 à 9, caractérisé en ce que les fibres sont utilisées sous la forme de nappes ou de nattes.

11. Procédé suivant au moins l'une des revendications 1 à 10, caractérisé en ce que l'on utilise des fibres isolées sous une forme désordonnée ou orientée.

12. Utilisation des xérogels renforcés par des fibres, préparés selon le procédé suivant au moins l'une des revendications 1 à 11, comme matière d'isolation thermique et/ou comme matière d'absorption acoustique.

EP 0 778 815 B1

**Fig. 1**

15